# EUROPÄISCHE PATENTANMELDUNG

(11) **EP 0 976 966 A2**
(43) Veröffentlichungstag der Anmeldung: **02.02.2000**
(21) Anmeldenummer: 99114764.6
(22) Anmeldetag: 28.07.1999
(51) Int. Cl.: F16L 59/14

(54) **Bausatzteil für Leitungen von Solaranlagen**

(30) Priorität: 29.07.1998 DE 19834293
(71) Anmelder: Praxenthaler, Martin, 83278 Traunstein (DE)
(72) Erfinder: Praxenthaler, Martin, 83278 Traunstein (DE)
(74) Vertreter: Zmyj, Erwin, Dipl.-Ing., Dipl.-Wirtsch.-Ing.

(57) **Zusammenfassung**

Eine Verbindungsleitung (2) zwischen auf einem Dach angeordneten Kollektoren (1) und einer Warmwasseraufbereitungsanlage (3) ist aus verschiedenen Bausatzteilen zusammengesetzt, die jeweils ein Schutzrohr (4) und darin aufgenommene Leitungen (5, 6, 12, 12') umfassen, die durch eine Ausschäummasse (13) innerhalb des Schutzrohres (4) gehalten sind. Dabei stehen die Enden der Leitungen über das Schutzrohr hinaus und können mittels Verbindungsteilen (14, 15, 16) mit den Leitungen eines benachbarten Bausatzteiles verbunden werden. Diese Stoßstelle ist durch eine an einem Ende eines Bausatzteiles angeordnete Schiebemuffe (17) abdeckbar. Die Bausatzteile können als geradlinige Rohre, als Rohrkrümmer und als Winkelstücke ausgeführt sein, um das aus den einzelnen Bausatzteilen zusammengesetzte Verbindungsrohr (2) einer Gebäudewand nach Art einer Dachrinne anpassen zu können

## Beschreibung

Die Erfindung bezieht sich auf einen Bausatzteil für sämtliche beim Betrieb einer Solaranlage zwischen Kollektoren und einer Warmwasseranlage vorgesehene Leitungen.

Bei der Altbausanierung verbunden mit dem Einbau einer Solaranlage ist es häufig nicht nur schwierig, sondern auch teuer, sämtliche für den Betrieb einer Solaranlage notwendigen Leitungen zwischen den am Dach angeordneten Kollektoren und einer beispielsweise im Keller des Gebäudes untergebrachten Warmwasseranlage zu verlegen. Bisher war es notwendig, entsprechende Wandschlitze vorzusehen, die Leitungen einzubringen und anschließend wieder zu verputzen.

Aufgabe der Erfindung ist es, Bausatzteile für das nachträgliche Verlegen sämtlicher Leitungen einer Solaranlage zu schaffen, die bei äußerst geringen baulichen Eingriffen in die Altbausubstanz in einfacher Weise schnell und kostengünstig montiert werden können.

Diese Aufgabe wird bei einem Bausatzteil für sämtliche beim Betrieb einer Solaranlage zwischen den Kollektoren und einer Warmwasseranlage vorgesehene Leitungen dadurch gelöst, daß sämtliche Leitungen in einem Schutzrohr mittels einer in das Schutzrohr einbringbaren Masse gehalten sind und daß die jeweiligen Leitungen an beiden Enden des Schutzrohres über dieses hervorstehen. Unter dem Begriff Leitungen sollen sowohl die Vorlaufleitung und die Rücklaufleitung für das Wärmeträgermedium, elektrische Signalleitungen und elektrische Steuerleitungen sowie Leerrohre für das nachträgliche Einführen von elektrischen Leitungen oder Vakuumleitungen verstanden werden.

Durch diese erfindungsgemäße Ausgestaltung sind sämtliche notwendigen Leitungen, die zwischen den Kollektoren und einer Warmwasseranlage verlegt werden müssen, gebündelt in einem Schutzrohr endlicher Länge untergebracht und bilden somit ein Bausatzteil eines Systems, bei welchem keine Einzelrohrverlegungen mehr erforderlich sind, sondern das komplette Systemrohr, das heißt Schutzrohr, beinhaltet sämtliche Leitungen, wobei dann selbstverständlich entsprechende Zusammenfügungen solcher Bausatzteile notwendig sind. Ein solches Schutzrohr weist beispielsweise die Außenabmessungen eines Regenrohres auf und kann deshalb außen am Gebäude entlang verlegt werden, ohne daß Mauerschlitze mit den entsprechenden notwendigen Arbeiten, wie Schlitze fräsen, Leitungen verlegen, verputzen und Anstricharbeiten, erforderlich wären. Es sind nur entsprechend abzudichtende Durchbrüche am Keller und an der Dachabdeckung notwendig, um dieses Schutzrohr in den Keller einzuführen und durch die Dachhaut hindurch zu den Kollektoren zu führen.

Um die einzelnen Bausatzteile zu einem vollständigen Leitungssystem zwischen Kollektoren und Warmwasserboiler zusammenfügen zu können, sind in weiterer Ausgestaltung der Erfindung die überstehenden Leitungen mit Verbindungsteilen zum Anschluß an Leitungen eines weiteren Bausatzteiles versehen. Solche Verbindungsteile können Schraubmuffen oder Preßmuffen üblicher Bauart sein.

Um diese Verbindungs- bzw. Stoßstellen besser in das Gesamtsystem zu integrieren ist jeweils ein Ende eines Bausatzteiles mit einem Abdeckteil zum Überdecken des Verbindungsstoßes zwischen zwei Bausatzteilen versehen. Das Abdeckteil kann als Schiebemuffe oder als Aufsteckteil ausgeführt sein. Vor dem Anbringen des Abdeckteiles bzw. vor dem Überschieben der Schiebemuffe können die freiliegenden Leitungen bzw. Rohre, falls erforderlich, mit Isoliermaterial umgeben werden.

Eine besonders schnelle und günstige Art der Fixierung der Leitungen und Rohre in dem Schutzrohr ist dadurch gegeben, daß die einbringbare Masse eine Ausschäummasse ist. Hier kann beispielsweise Polyurethan-Schaum zur Anwendung kommen, wobei allerdings in diesem Falle die warmen Vorlaufleitungen und Rücklaufleitungen vorher mit einem Isoliermaterial versehen werden müssen, welches der Wärmebelastung standhält und eine Zerstörung des Polyurethan-Schaumes verhindert.

Zum Fixieren der Leitungen innerhalb des Schutzrohres können auch Vergußmassen verwendet werden, die nach einer gewissen Zeit aushärten. Weiterhin ist es nicht erforderlich, das gesamte Schutzrohr mit einer solchen Ausgußmasse auszufüllen. Bei kurzen Bausatzteilen kann es ausreichend sein, das Schutzrohr nur an den Enden mit einer Vergußmasse oder einer Ausschäummasse auszufüllen, um die Leitungen in ausreichend sicherer Weise zu halten.

Bei einer vorteilhaften Ausgestaltung der Erfindung sind in dem Schutzrohr eine wärmeisolierte Vorlaufleitung, eine wärmeisolierte Rücklaufleitung für ein Wärmeträgermedium und mindestens ein Leerrohr für elektrische Signal- und Steuerleitungen und andere Serviceleitungen eingesetzt. Eine solche Serviceleitung kann beispielsweise eine Vakuumleitung sein, weshalb es vorteilhaft ist, ein zusätzliches Leerrohr für einen Vakuumanschluß vorzusehen. Ein solcher Vakuumanschluß ist bei bestimmten Kollektoren notwendig, bei denen unter der Glasabdeckung zur Verminderung der Isolierwirkung von eingeschlossener Luft ein Unterdruck aufrechterhalten wird. Ein solcher Unterdruck muß in gewissen Zeitabständen erneut wieder aufgebaut werden, wofür zweckmäßigerweise im Bereich der Warmwasseraufbereitungsanlage eine entsprechende Vakuumpumpe vorgesehen ist.

Zum Aufbau eines kompletten Bausatzes kann das Bausatzteil verschiedene Formen aufweisen. Bei bevorzugten Bausatzteilen kann das Schutzrohr geradlinig, als Rohrkrümmer oder als Winkelstück ausgebildet sein. Bei den geradlinigen Schutzrohren können unterschiedliche Längen vorgesehen sein, um bei der Verlegung der notwendigen Leitungen mit vorgefertigten Bausatzteilen auszukommen. Beim Übergang von der Außenwand durch die Kellerwand hindurch oder beim Übergang von der Außenwand unter die Dachhaut können Rohrkrümmer nützlich sein, während beim Überfahren von Wandvorsprüngen oder -absätzen Winkelstücke erforderlich sein können. Hier können Rohrkrümmer und Winkelstücke mit unterschiedlichen Radien und unterschiedlichen Winkeln als Bausatzteile vorgesehen sein. Das Schutzrohr kann je nach Erfordernis aus Metall oder Kunststoff bestehen, wobei bei den Schutzrohren aus Metall Kupfer, verzinkte Eisenblechrohre, Edelstahlrohre usw. und auch kunststoffbeschichtete Eisenblechrohre verwendet werden können, und zwar je nachdem wie dies die bautechnischen oder die äußeren optischen Verhältnisse bei der Verlegung an einem Gebäude erfordern.

Die Erfindung wird nachfolgend anhand eines in der Zeichnung dargestellten Ausführungsbeispieles näher erläutert. In der Zeichnung zeigen:
- **Figur 1:**: eine schematische Darstellung einer Solaranlage an einem Altbau;
- **Figur 2:**: eine schaubildliche Darstellung eines Bausatzteiles;
- **Figur 3:**: einen Verbindungsstoß zwischen zwei Bausatzteilen im freigelegten Zustand;
- **Figur 4:**: diesen Verbindungsstoß in einem durch eine Schiebemuffe abgedeckten Zustand;
- **Figur 5:**: ein Bausatzteil als Rohrkrümmer; und
- **Figur 6:**: zwei zusammengefügte Bausatzteile in Form von Winkelstücken.

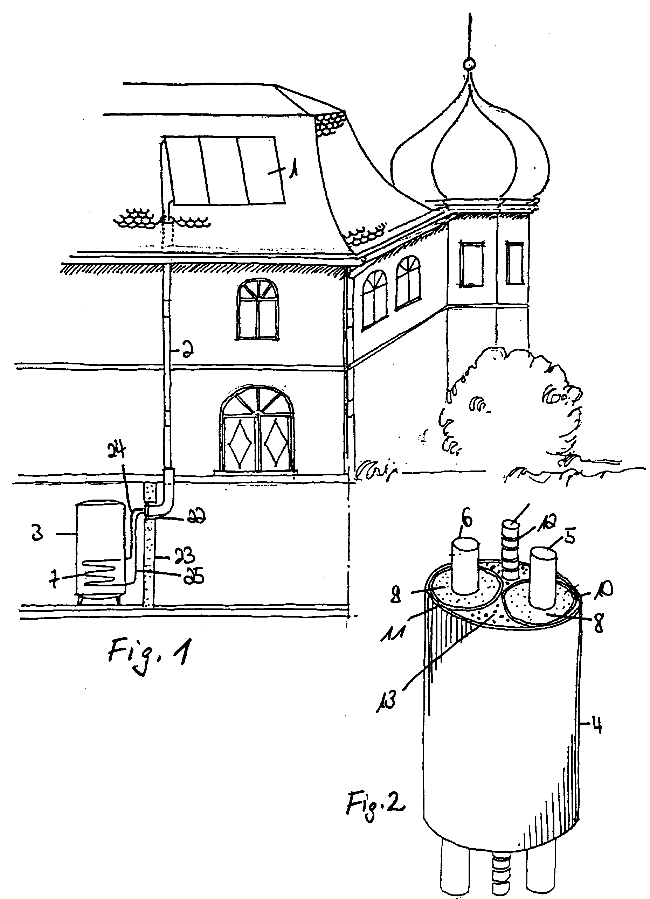

In Figur 1 ist an einem Altbau nachträglich eine Solaranlage installiert, bei der die auf dem Dach des Gebäudes angeordneten Kollektoren 1 über eine Systemleitung 2 nach der vorliegenden Erfindung mit einem im Keller des Gebäudes aufgestellten Warmwasserboiler 3 verbunden sind. Die Systemleitung 2 umfaßt, wie aus Figur 2 ersichtlich, innerhalb eines Schutzrohres 4 eine Vorlaufleitung 5 und eine Rücklaufleitung 6 für ein Wärmeträgermedium, das innerhalb der Kollektoren durch die Sonnenlichteinstrahlung erwärmt und mittels einer im Bereich des Warmwasserboilers 3 vorgesehenen Umwälzpumpe zwischen den Kollektoren und einer Heizschlange 7 innerhalb des Warmwasserboilers 3 umgewälzt wird. Sowohl die Vorlaufleitung 5 als auch die Rücklaufleitung 6 sind mit einer Wärmeisolierung 8 bzw. 9 umgeben, die aus Mineralwolle besteht und von einer Blechummantelung 10 bzw. 11 umgeben ist, wobei die Blechummantelung vorzugsweise aus einem Aluminiumblech besteht. Weiterhin befindet sich innerhalb des Schutzrohres 4 ein Leerrohr 12 für eine Kabeldurchführung, und zwar für eine Signal- und Steuerleitung, die einen bei den Kollektoren angeordneten Temperaturfühler mit einer Steuervorrichtung verbindet, welche bei einer ausreichenden Temperaturdifferenz zwischen den Kollektoren und dem zu erwärmenden Wasser eine nicht dargestellte Umwälzpumpe in Betrieb setzt, die den Wärmeträger aus der Heizschlange 7 zu den Kollektoren 1 und zurück pumpt. Die verbleibenden Zwischenräume zwischen den isolierten Vor- und Rücklaufleitungen und dem Leerrohr sind durch eine Ausschäummasse 13 ausgeschäumt. Das Schutzrohr 4, die darin aufgenommenen Leitungen 5 und 6 und das Leerrohr 12 bilden zusammen ein Bausatzteil, welches mit weiteren noch näher zu erläuternden Bausatzteilen zu der fertigen Systemleitung 2 zusammengesetzt werden können.

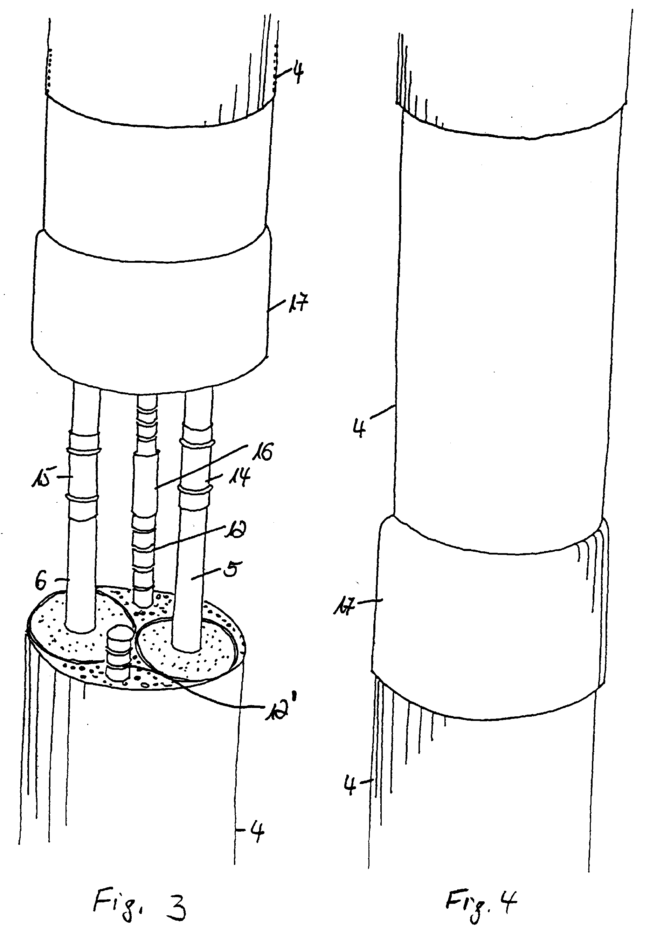

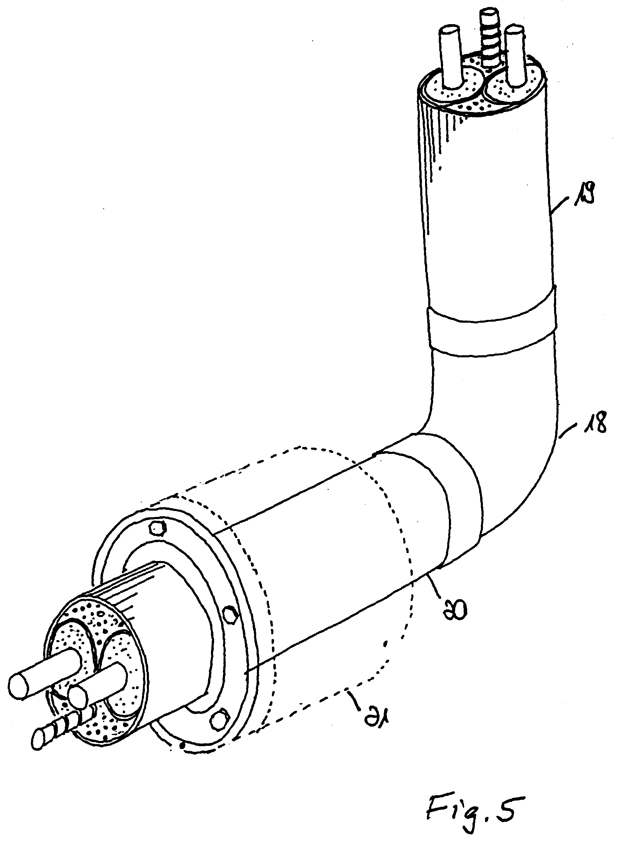

Die Figuren 3 und 4 zeigen eine Stoßstelle zwischen zwei Bausatzteilen 4. Jedes Bausatzteil ist so gestaltet, daß die in dem Schutzrohr 4 aufgenommenen Leitungen oder Rohre an den Enden des Schutzrohres über dieses hervorstehen, so daß mit Hilfe von Verbindungsteilen 14, 15, 16 in Form von Preßmuffen oder Schraubmuffen die jeweils überstehenden Enden der Leitungen und Rohre miteinander verbunden werden können. Die in Figur 3 dargestellte offene Stoßverbindung kann beispielsweise mit Mineralfasern aufgefüllt werden. Zur Überdeckung dieses Verbindungsstoßes ist eine Schiebemuffe 17 jeweils an einem Ende des Schutzrohres 4 vorgesehen, die über das benachbarte Ende des nächsten Schutzrohres geschoben werden kann, wie dies aus Figur 4 hervorgeht. Diese Schiebemuffe ist immer vorgesehen, und zwar unabhängig davon, ob es sich um ein geradliniges, gekrümmtes oder abgewinkeltes Schutzrohr handelt.

Mit 12' ist ein weiteres Leerrohr bezeichnet, das zur Aufnahme einer Vakuumleitung dienen kann, um in den jeweiligen Kollektorenblöcken einen bestimmten Unterdruck aufrechtzuerhalten.

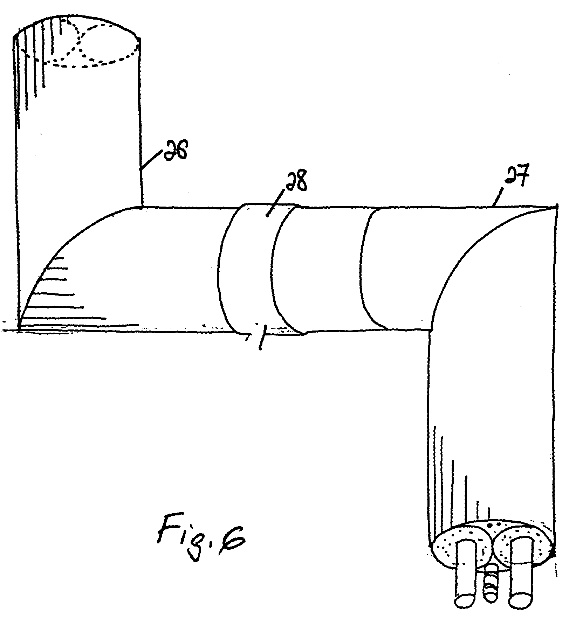

Figur 5 zeigt einen Bausatzteil in Form eines Rohrkrümmers 18 und daran angesetzten, kurzen, geraden Rohrstücken 19 und 20, um den Anschluß an gerade Bausatzteile besser vornehmen zu können. Der eine gerade Rohransatz 20 ist durch eine dichtende Manschette 21 geführt, die in einem Wanddurchbruch 22 einer Kellerwand 23 eingesetzt ist, wie dies bei der Wanddurchführung gemäß Figur 1 vorgesehen ist. Die Verbindung zwischen den Vorlauf- und Rücklaufleitungen und der Rohrschlange 7 im Warmwasserboiler kann durch elastische Druckschläuche 24 und 25 erfolgen. Ebenso sind solche elastischen Druckschläuche im Bereich der Verbindung zu den Kollektoren vorgesehen, die hier im einzelnen nicht dargestellt sind.

Figur 6 zeigt zwei identische Bausatzteile in Form von Winkelstücken 26 und 27, deren Stoßbereich, welcher demjenigen nach Figur 3 entspricht, durch eine Schiebemuffe 28 überdeckt ist. Solche zwei aneinandergesetzten Bausatzteile in Form von Winkelstücken sind notwendig, um Mauerabsätze in angepaßter Form zu überwinden. Bei kurzen Zusammensetzungen, wenn die Schiebemuffe nicht mehr ausreichend geschoben werden kann, muß eine seitlich aufsteckbare Abdeckung eingesetzt werden.

## Patentansprüche

1. Bausatzteil für sämtliche beim Betrieb einer Solaranlage zwischen Kollektoren und einer Warmwasseranlage vorgesehene Leitungen, **dadurch gekennzeichnet,** daß sämtliche Leitungen (5, 6, 12, 12') in einem Schutzrohr (4) mittels einer in das Schutzrohr einbringbaren Masse (13) gehalten sind und daß die jeweiligen Leitungen an beiden Enden des Schutzrohres (4) über dieses hervorstehen.

2. Bausatzteil nach Anspruch 1, **dadurch gekennzeichnet,** daß die überstehenden Leitungen (5, 6, 12, 12') mit Verbindungsteilen (14, 15, 16) zum Anschluß an Leitungen eines weiteren Bausatzteiles versehen sind.

3. Bausatzteil nach Anspruch 1 oder 2, **dadurch gekennzeichnet,** daß jeweils ein Ende eines Bausatzteiles mit einem Abdeckteil (17) zum Überdecken des Verbindungsstoßes zwischen zwei Bausatzteilen versehen ist.

4. Bausatzteil nach Anspruch 3, **dadurch gekennzeichnet,** daß das Abdeckteil als Schiebemuffe (17) ausgebildet ist.

5. Bausatzteil nach einem der Ansprüche 1 bis 4, **dadurch gekennzeichnet,** daß die einbringbare Masse eine Ausschäummasse (13) ist.

6. Bausatzteil nach einem der Ansprüche 1 bis 5, **dadurch gekennzeichnet,** daß in dem Schutzrohr (4) eine wärmeisolierte Vorlaufleitung (5), eine wärmeisolierte Rücklaufleitung (6) für ein Wärmeträgermedium und mindestens ein Leerrohr (12, 12') für eletrische Signal- und Steuerleitungen und andere Serviceleitungen eingesetzt sind.

7. Bausatzteil nach Anspruch 6, **dadurch gekennzeichnet,** daß ein zusätzliches Leerrohr (12) für einen Vakuumanschluß vorgesehen ist.

8. Bausatzteil nach einem der Ansprüche 1 bis 7, **dadurch gekennzeichnet,** daß das Schutzrohr (4) geradlinig ausgebildet ist.

9. Bausatzteil nach einem der Ansprüche 1 bis 7, **dadurch gekennzeichnet,** daß das Schutzrohr als Rohrkrümmer (18) ausgebildet ist.

10. Bausatzteil nach einem der Ansprüche 1 bis 7, **dadurch gekennzeichnet,** daß das Schutzrohr als Winkelstück (26, 27) ausgebildet ist.

11. Bausatzteil nach einem der Ansprüche 1 bis 10, **dadurch gekennzeichnet,** daß das Schutzrohr (4, 18, 26) aus Metall besteht.

12. Bausatzteil nach einem der Ansprüche 1 bis 10, **dadurch gekennzeichnet,** daß das Schutzrohr (4, 18, 26) aus Kunststoff besteht.
